# EUROPÄISCHE PATENTSCHRIFT

(11) **EP 1 040 704 B1**
(45) Veröffentlichungstag und Bekanntmachung des Hinweises auf die Patenterteilung: **16.07.2003**
(21) Anmeldenummer: 98960849.2
(22) Anmeldetag: 16.12.1998
(51) Int. Cl.: H04Q 11/04, H04Q 7/26

(54) **TELEPHONSYSTEM**
TELEPHONE SYSTEM
SYSTEME TELEPHONIQUE

(30) Priorität: 18.12.1997 AT 214697
(43) Veröffentlichungstag der Anmeldung: 04.10.2000
(73) Patentinhaber: Ericsson Enterprise GmbH, 1121 Wien (AT)
(72) Erfinder: PIGNITTER, Manfred, A-1100 Wien (AT); FLEGE, Ernst, A-1200 Wien (AT)
(74) Vertreter: Gibler, Ferdinand, Dipl.Ing. Dr. techn.
(86) Internationale Anmeldenummer: AT9800306
(87) Internationale Veröffentlichungsnummer: WO99033310

(56) Entgegenhaltungen:
- EP-A- 0 624 995
- EP-A- 0 802 693
- US-A- 5 355 402
- KOHTALA A: "PRIVATEL - A PARALLEL EXTENSION TAILORED FOR LARGE USER GROUPS" PROCEEDINGS OF THE 5TH NORDIC SEMINAR ON DIGITAL MOBILE RADIO COMMUNICATIONS, HELSINKI, FINLAND, 1 - 3 DEC. 1992, Seiten 69-72, XP000457837

## Beschreibung

Die Erfindung betrifft ein Telephonsystem mit einer Nebenstellenanlage, die zumindest einen Schaltknoten, zwei oder mehrere Nebenstellen-Ausgänge für Nebenstellen-Endgeräte und zumindest einen Amtsleitungs-Ausgang umfaßt, über welchen Schaltknoten die Nebenstellen-Ausgänge mit dem zumindest einen Amtsleitungs-Ausgang verbindbar sind, wobei ein oder mehrere der Amtsleitungs-Ausgänge jeweils über eine Amtsleitung mit einem drahtgebundenen Telephonnetzwerk verbunden sind.

Bekannte Telephonsysteme dieser Art dienen der automatischen Vermittlung von Nebenstellenteilnehmern an das drahtgebundene, öffentliche Telephonnetzwerk. Durch das Auftreten privater oder teilweise privatisierter Netzbetreiber im Funktelephonbereich haben sich in den letzten Jahren auch sehr große Unterschiede in den Gesprächsgebühren ergeben, die besonders deutlich werden, wenn ein drahtgebundener Telephon-Teilnehmer ein Gespräch mit einem Funktelephon-Teilnehmer führt, da es praktisch zu einer Überlagerung von zwei Gebührensystemen kommt. Da aber die Betreiber von Funktelephon-Netzwerken untereinander unter beträchtlichem Konkurrenzdruck stehen, ist es zudem zu einer Aufspaltung von Gesprächsgebühren in verschiedene Anwendungsgruppen gekommen. Ein Ergebnis dieser Bestrebungen ist etwa die Herabsetzung des Gesprächstarifes, wenn zwei Funktelephon-Teilnehmer desselben Betreibers miteinander telephonieren.

Aufgabe der Erfindung ist es daher, die vorstehend erwähnten Nachteile zu vermeiden und ein Telephonsystem der eingangs genannten Art anzugeben, mit dem eine Gebührenreduktion bei Gesprächsverbindungen zwischen einem drahtgebundenen und einem Funktelephon-Teilnehmer erzielt werden kann.

Erfindungsgemäß wird dies dadurch erreicht, daß ein oder mehrere weitere Amtsleitungs-Ausgänge in an sich bekannter Weise jeweils über eine Amtsleitung mit einer Sende- und Empfangsvorrichtung verbunden sind, die mit einem Funktelephon-Netzwerk verbindbar ist.

Damit kann eine vorteilhafte Selektion von ausgehenden Gesprächen getroffen werden, indem an drahtgebundene Teilnehmer gerichtete Gesprächsverbindungen über jene Amtsleitung geschaltet werden, die mit einem Wählamt des öffentlichen, drahtgebundenen Telephonnetzwerks in Verbindung steht, während an Funktelephon-Teilnehmer gerichtete Gespräche automatisch über eine Amtsleitung gelegt werden, die mit einer Sende- und Empfangsvorrichtung verbunden ist, über die eine Verbindung mit einem Funktelephon-Netzwerk herstellbar ist. Damit kann der für Gespräche zwischen zwei Funktelephon-Teilnehmern angebotene niedrigere Tarif genutzt werden, ohne daß der Nebenstellenteilnehmer dafür eine eigenes Funktelephon vorsehen muß. Darüberhinaus entstehen für den Nebenstellenteilnehmer keine weiteren Mühen als die Wahl der richtigen Teilnehmernummer an seinem Nebenstellenendgerät. Im Rahmen der Anmeldung werden dabei unter solchen Endgeräten alle möglichen Ausführungen verstanden, die wie ein Faxgerät auch der non-verbalen Kommunikation dienen können.

Die Sende- und Empfangsvorrichtung kann gemäß einer weiteren Ausführungsform der Erfindung dabei durch eine einem privaten Netzbetreiber zugeordnete, stationäre Funktelephon-Einheit (FCT) gebildet sein, welcher vorzugsweise eine Vorrichtung zur Sprachkompression bzw. -dekompression zugeordnet ist. Damit gelangt der Nebenstellenteilnehmer automatisch in den Genuß der gebührenerniedrigten Gesprächsverbindungen mit anderen Funktelephonen desselben Netzbetreibers, wobei die Vorrichtung zur Sprachkompression bzw. -dekompression der besseren Ausnutzung der Sendebandbreite der stationären Funktelephoneinheit dient.

In weiterer Ausbildung der Erfindung kann vorgesehen sein, daß die zumindest eine weitere Amtsleitung durch eine digitale Amtsleitung mit digitalen Schnittstellen an ihren Enden ausgebildet ist.

Dadurch vereinfacht sich sowohl auf der Nebenstellenseite als auch in der Sende- und Empfangsvorrichtung der schaltungsmäßige Aufwand, da die Digital-Analog-Wandlung wegfällt und die Daten direkt digital übertragen werden können.

In bevorzugter Weise kann gemäß einer Variante der Erfindung die zumindest eine digitale Amtsleitung eine ISDN-Leitung mit ISDN-Schnittstellen sein. Durch den standardisierten Aufbau einer solchen Amtsleitung ist eine kostengünstige Verwirklichung möglich.

Dabei hat es sich als besonders vorteilhaft herausgestellt, wenn die Signalisierung auf der digitalen Amtsleitung in digitaler Form erfolgt, wobei digitale Dienste wie SMS, COLP, CLIP o.ä. an das Nebenstellen-Endgerät übertragbar bzw. von diesem sendbar sind.

Damit können verschiedene für ein Funktelephon übliche Funktionsmerkmale, wie z.B. SMS (short message service) zur Übertragung von Nachrichten, die beim Empfänger angezeigt werden können und Anzeige der Anrufer-Teilnehmernummer (CLIP) bzw. der gerufenen Teilnehmernummer (COLP) o.ä., auch für den Nebenstellenteilnehmer nutzbar gemacht werden.

Moderne digitale Nebenstellenanlagen verfügen über ein umfassendes integriertes Textnachrichtensystem. Mit diesem Nachrichtensystem können von jedem Nebenstellenendgerät über dessen Tastatur Textnachrichten (z.B. "Bitte um Rückruf...") an andere Nebenstellenendgeräte mit einem entsprechenden Display gesendet werden. Eine wesentliche Erweiterung einer solchen Nebenstellenanlage durch das erfindungsgemäße System besteht daher darin, diese Nachrichten nicht nur intern sondern auch an externe Funktelephone schicken zu können, auf denen diese Nachrichten sichtbar gemacht werden können. Dazu wird der Funktelephon-Teilnehmer als Empfänger der Nachricht eingegeben. Dieser Empfänger der Nachricht erkennt auch den Absender der Nachricht, da dessen Name und dessen Teilnehmernummer inklusive der Landes- und Ortsvorwahl mit übermittelt werden kann. Als Teilnehmemummer kann jene der Sende- und Empfangseinrichtung und die entsprechende Nebenstellennummer angegeben werden.

Der Nachrichtenempfänger kann nun rückrufen oder dem Absender ebenfalls eine Nachricht zukommen lassen, da im mitgesendeten Adreß-Header die Teilnehmernummer mitgeschickt worden ist und entsprechend verwertet werden kann. Die Nachricht wird von der Nebenstellenanlage weitergeleitet. Das Nebenstellenendgerät zeigt die ankommende Nachricht z.B. durch eine Signallampe oder ein Rufsignal an, worauf der Benutzer diese von seinem Display ablesen kann.

Weiters können aufgrund der digitalen Signalisierung auf der digitalen Amtsleitung gegenüber einer analogen Amtsleitung die sonst erforderlichen Digital-Analog bzw. Analog-Digital-Wandler eingespart werden, die am Übergang von der digitalen Nebenstellenanlage auf die analoge Amtsleitung vorgesehen werden müssen.

Darüberhinaus kann durch die digitale Übertragung auf der Amtsleitung keine Qualitätsminderung durch Signaldämpfung entstehen.

Gemäß einer besonders bevorzugten Variante der Erfindung kann die Signalisierung gemäß dem ISDN-Protokoll oder gemäß einem erweiterten bzw. reduzierten ISDN-Protokoll erfolgen. Damit können die bereits vorgegebenen Standards für die Übertragung von Daten und Gesprächen sowie für die in ISDN- und GSM-Endgeräten angebotenen Zusatzdienste wirkungsvoll eingesetzt werden.

Gemäß einem weiteren Merkmal der Erfindung kann vorgesehen sein, daß die Sende- und Empfangsvorrichtung an einem anderen Anbringungsort, vorzugsweise an einem Ort mit guter Funk-Empfangslage, als dem der Nebenstellenanlage angeordnet ist.

Damit kann die Sende- und Empfangsvorrichtung an einer Stelle angeordnet werden, die den bestmöglichen Funkempfang gewährleistet. Dies wird immer dann zu empfehlen sein, wenn eine Anbringung innerhalb oder im Bereich der Nebenstellenanlage eine deutliche Beeinträchtigung des Gesprächs- bzw. Datenverkehrs zur Folge hat.

Üblicherweise befindet sich in jeder Funktelephon-Einheit zur Erhöhung der Anzahl an übertragenen Gesprächen eine Kompressions- und Dekompressionsvorrichtung, mit der die zu übertragenden Sprach- oder Datensignale komprimiert werden können, um so eine bessere Ausnutzung der Sendekanäle zu ermöglichen.

Um nun eine Reduktion der für die Verbindung zu den Sende - und Empfangsvorrichtungen vorgesehenen Amtsleitungen zu erzielen, kann gemäß einer anderen Variante der Erfindung vorgesehen sein, daß die Vorrichtung zur Sprachkompression bzw. -dekompression innerhalb der Nebenstellenanlage angeordnet ist, und daß der Ausgang der Vorrichtung zur Sprachkompression bzw. -dekompression mit der nebenstellenseitigen, digitalen Schnittstelle verbunden ist. Damit können über eine Amtsleitung bzw. über eine Schnittstelle bei einer üblichen Kompressionsrate von 13,3 kBit/s bis zu 9 Gespräche gleichzeitig übertragen werden, sodaß insgesamt weniger Schnittstellen benötigt werden. Durch das daraus resultierende Wegfallen von Schnittstellen ergibt sich eine Senkung des Installations- und Wartungsaufwandes. Ebenso wird der Geräteaufwand an sich verringert.

Eine weitere Aufgabe der Erfindung besteht darin, ein Verfahren zur Vermittlung eines Nebenstellen-Endgeräts in einem erfindungsgemäßen Telephonsystem anzugeben, mit welchem eine Telephongebührenemiedrigung erzielbar ist.

Erfindungsgemäß wird dies dadurch erreicht, daß innerhalb der Nebenstellenanlage zuerst die über eines der Nebenstellen-Endgeräte angewählte Teilnehmernummer bzw. der den Netzbetreiber kennzeichnende Teil davon mit gespeicherten Nummern bzw. Nummernteilen, denen jeweils eine Amtsleitung zugeordnet ist, verglichen und danach die Verbindung über die der Teilnehmernummer bzw. dem Nummernteil des Netzbetreibers zugeordneten Amtsleitung vermittelt wird.

Damit kann je nach angewählter Teilnehmernummer die hinsichtlich des angewählten Teilnehmers günstigste Verbindung zu einer der vorgesehenen Amtsleitungen hergestellt werden.

In weiterer Ausbildung der Erfindung kann vorgesehen sein, daß bei Anwählen einer einen Funktelephonnetz-Betreiber kennzeichnenden Teilnehmernummer das anwählende Nebenstellen-Endgerät über eine diesem Netzbetreiber zugeordnete Funktelephon-Einheit und die mit der Funktelephon-Einheit verbundenen Amtsleitung vermittelt wird.

Wird somit ein Funktelephon-Teilnehmer angewählt, wird automatisch die Verbindung über eine dem jeweiligen Netzbetreiber zugeordnete stationäre Funktelephon-Einheit hergestellt, wodurch ein entsprechend niedriger Gesprächstarif verrechnet wird.

Gemäß einer weiteren Variante der Erfindung kann vorgesehen sein, daß bei Anwählen einer gespeicherten Teilnehmemummer bzw. von Teilen der Teilnehmernummer, deren zugehöriger Teilnehmer an eine weitere Nebenstellenanlage angeschlossen ist, die sowohl über ein drahtgebundenes Telephonnetzwerk als auch über ein Funktelephon-Netzwerk anwählbar ist, das anwählende Nebenstellen-Endgerät mit dem angewählten Nebenstellen-Endgerät über eine der der angewählten Teilnehmemummer bzw. Teilen davon zugeordneten Funktelephon-Einheiten und die mit dieser verbundenen Amtsleitung vermittelt wird.

Dadurch ist es möglich, bestimmte Teilnehmer, von denen bekannt ist, daß sie auch über ein Funktelephon erreichbar sind, bei Anwahl ihrer dem drahtgebundenen Telephonnetzwerk entsprechenden Teilnehmemummer nicht über dieses sondern über ein Funktelephon-Netzwerk zu vermitteln, womit ein entsprechend niedriger Gespächstarif erzielbar ist. Eine Ausführungsmöglichkeit besteht etwa darin, die Zentrale einer Firma und deren Filialen mit erfindungsgemäßen Telephonsystemen auszustatten, sodaß das erfindungsgemäße Vermittlungsverfahren angewandt werden kann.

Die Erfindung wird nachstehend anhand der in den Zeichnungen dargestellten Ausführungsbeispiele eingehend erläutert. Es zeigt dabei
Fig. 1 ein Blockschaltbild einer Ausführungsform des erfindungsgemäßen Telephonsystems;
Fig.2 ein Blockschaltbild einer weiteren Ausführungsform des erfindungsgemäßen Telephonsystems;
Fig.3 ein Blockschaltbild einer weiteren Ausführungsform des erfindungsgemäßen Telephonsystems;
Fig.4 ein Blockschaltbild einer Ausführungsform einer Funktelephon-Einheit und
Fig.5 ein Blockschaltbild zur erfindungsgemäßen Vermittlung von Teilnehmer-Endgeräten.

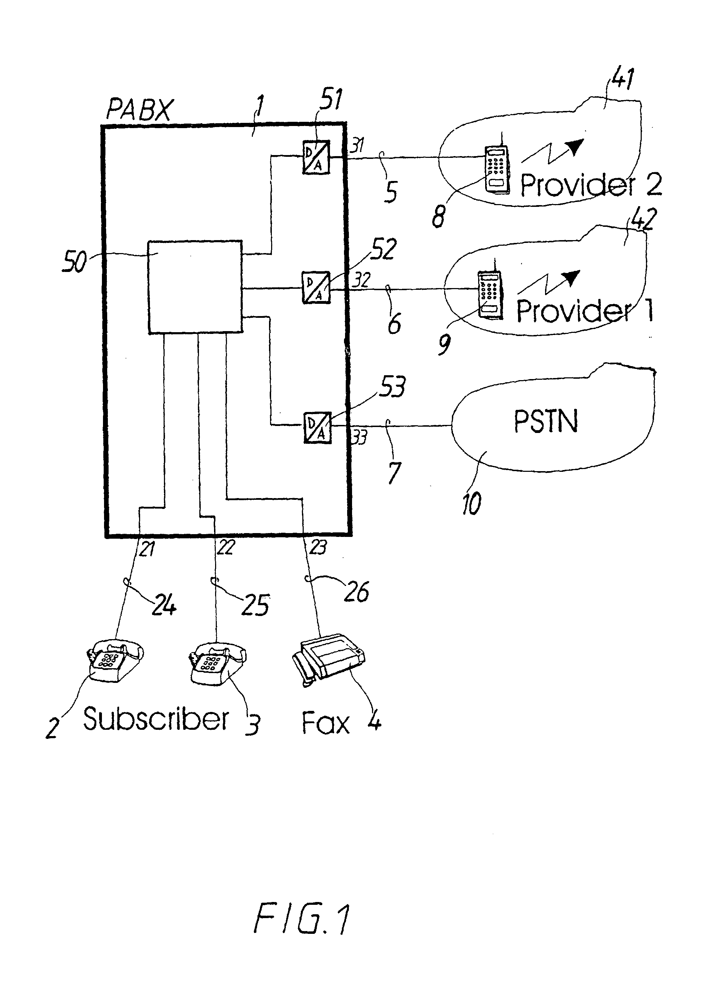

In Fig. 1 ist ein Telephonsystem mit einer digitalen Nebenstellenanlage 1 dargestellt, an die Teilnehmer-Endgeräte, wie analoge oder digitale Telephonapparate 2, 3 und ein Übertragungsgerät 4, z.B. ein Faxgerät, über Nebenstellen-Ausgänge 21, 22, und 23 angeschlossen sind, welche mit einem Koppelnetzwerk 50 verbunden sind, das einen oder mehrere Schaltknoten enthält. Über das Koppelnetzwerk 50 sind die Endgeräte 2, 3 und 4 an drei Amtsleitungs-Ausgänge 31, 32 und 33 verbindbar.

Die Anzahl an Teilnehmer-Endgeräten und zur Verfügung stehenden Amtsleitungen sind von der Größe der Nebenstellenanlage abhängig und unterliegen in allen erfindungsgemäßen Ausführungsbeispielen keiner Einschränkung.

Zur Umsetzung der vom Koppelnetzwerk 50 kommenden digitalen Signale in analoge Leitungssignale sind jeweils bidirektionale Digital-Analog-Wandler 51, 52, 53 zwischengeschaltet, um die Übertragung der von den Endgeräten 2, 3, 4 kommenden bzw. an diese gesendeten Signale auf analogen Amtsleitungen 5, 6 und 7 zu ermöglichen.

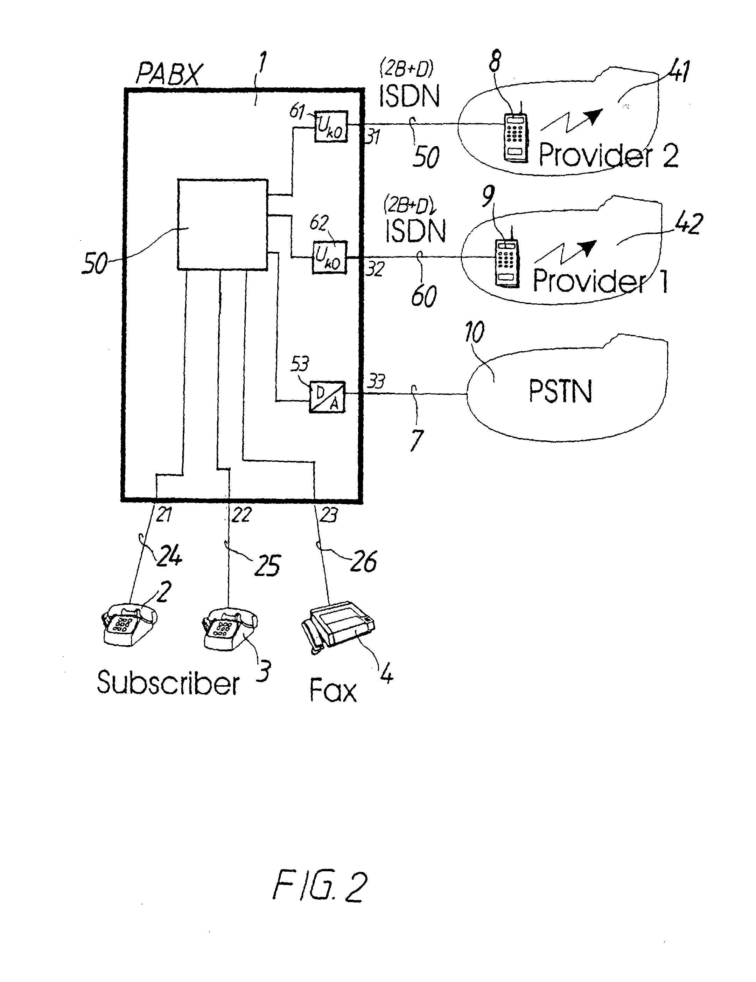

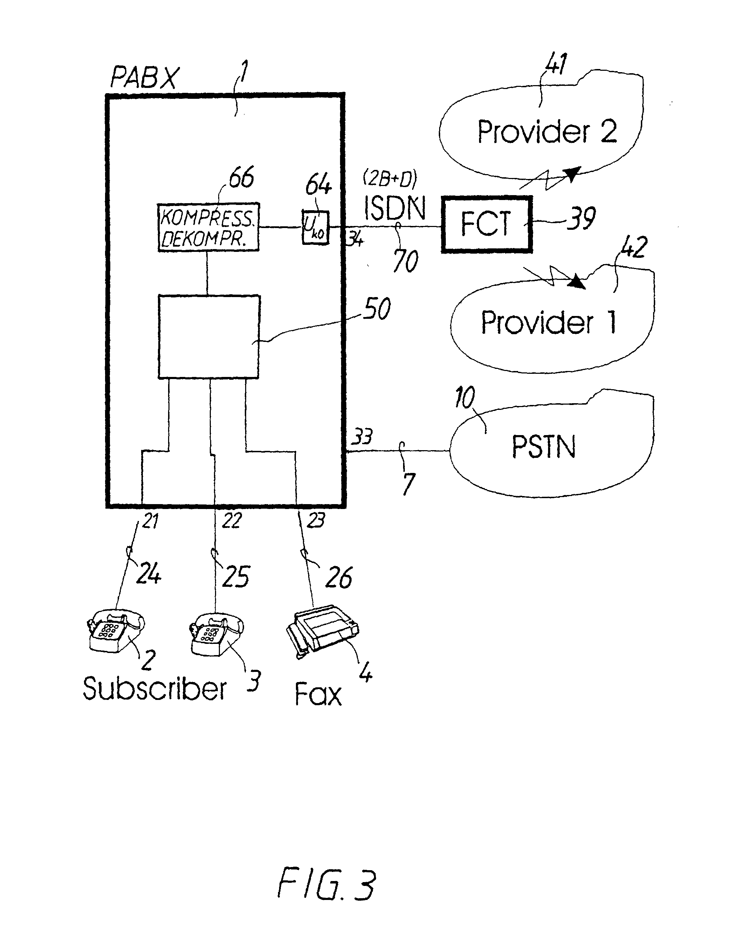

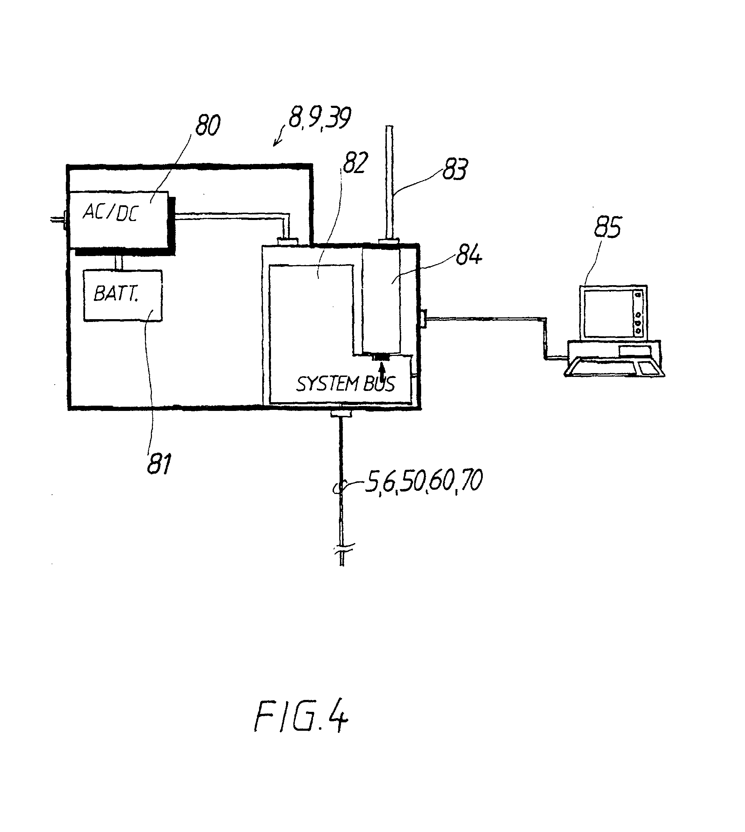

Die Amtsleitung 7 ist dabei über ein Wählamt mit dem öffentlichen, drahtgebundenen Telephon-Netzwerk 10 verbunden, sodaß ausgehende und eingehende Gespräche über dieses vermittelt werden können. Zum Unterschied davon sind die weiteren Amtsleitungen 5 und 6 jeweils mit einer Sende- und Empfangsvorrichtung 8, 9 verbunden, die mit je einem öffentlichen Funktelephon-Netzwerk 41, 42 verbindbar sind. Die Sende- und Empfangsvorrichtung kann dabei über eine einem privaten Netzbetreiber zugeordnete, stationäre Funktelephon-Einheit 8, 9 gebildet sein. Dazu zeigt Fig.4 die innere Struktur solcher als FCT (Fixed Cellular Terminal) bezeichneten Funktelephon-Einheiten. Die jeweils mit der Funktelephon-Einheit verbundene Amtsleitung 5, 6 (Fig. 1), 50, 60 (Fig.2) und 70 (Fig.3) ist im Inneren der Funktelephon-Einheit (Fig.4) über eine Schnittstelle mit einer einer Amtsschaltung entsprechenden Teilnehmerschaltung 82 verbunden, über die die von einem oder mehreren Teilnehmern kommenden Gespräche an eine Funk-Einheit 84 weitergeleitet und über eine Antenne 83 übertragen werden. In der Empfangsrichtung werden die empfangenen Signale dementspechend über den Sender 84 an die Teilnehmerschaltung 82 und die Amtsleitung 5, 6, 50, 60, 70 geleitet.

Über die Teilnehmerschaltung 82 können sowohl Sprache als auch zusätzliche Datendienste übertragen werden. Enthält die FCT-Einheit mehrere Sende- und Empfangsteile so können mehrere Gespräche gleichzeitig übertragen werden, wobei auch gleichzeitige Verbindungen zu zwei oder mehreren Netzbetreibern hergestellt werden können.

Ein Rechner 85 mit einem Wartungs-Interface ermöglicht die entsprechende Konfigurierung der Funktelephon-Einheit, die über ein Netzteil 80 und eine Stützbatterie 81 versorgt wird.

Über die in Fig. dargestellten, drei nebeneinander existierenden Amtsleitungsverbindungen 5, 6 und 7 kann nun innerhalb der Nebenstellenanlage eine besonders tarifsparende Selektion von Gesprächen vorgenommen werden. In drahtgebundenen Netzwerken sind die Gebühren für die Vermittlung eines Gespräches an einen Funktelephon-Teilnehmer besonders hoch. So wird beispielsweise dafür in Österreich immer der erste Femgesprächstarif in Rechnung gestellt. Dafür bieten die privaten Funktelephon-Netzbetreiber als Ausgleich die Möglichkeit an, innerhalb eines solchen Netzes von einem Funktelephon zu einem anderen besonders kostengünstig Gespräche zu führen. Die Erfindung macht sich diesen Gebührenvorteil nun zu eigen, indem die Nebenstellenanlage bei Anwahl einer einem Funktelephon-Netzwerk zugehörigen Teilnehmernummer nicht die Amtsleitung zum drahtgebundenen Netzwerk vermittelt, sondern jene zu einer Sende- und Empfangsvorrichtung des der angewählten Teilnehmemummer entsprechenden Funktelephon-Netzwerkes. Für den Nebenstellenteilnehmer ist diese Vermittlung nicht erkennbar, das Gespräch kann aber mit dem niedrigeren Gebührentarif geführt werden, der sogar unterhalb der Gesprächsgebühr von einem drahtgebundenen Teilnehmer zum anderen liegen kann.

Es kann somit durch die richtige Zuordnung der jeweils gewünschten Gespräche eine beträchtliche Gebührenreduktion erzielt werden.

Fig.2 zeigt eine weitere Ausführungsform der Erfindung, in welcher anstelle der analogen Amtsleitung zwischen den Amtsleitungs-Ausgängen 31, 32 und den Funktelephon-Einheiten 8, 9 jeweils eine digitale Amtsleitung 50, 60 mit digitalen Schnittstellen 61, 62 an ihren Enden ausgebildet ist.

Dadurch kann auf die Analog-Digital-Wandler 51, 52 der Ausführungsform gemäß Fig.1 verzichtet werden kann. Die digitalen Amtsleitungen gemäß Fig.2 sind als ISDN-Leitungen 50, 60 mit ISDN-Uₖ₀-Schnittstellen 61, 62 ausgeführt und die Signalisierung geschieht in digitaler Form, sodaß digitale Dienste wie SMS, COLP, CLIP o.ä., die sonst nur in ISDN-Netzen oder für Funktelephone verfügbar sind, an das Nebenstellen-Endgerät 2, 3, 4 übertragbar bzw. von diesem sendbar sind.

Vorteilhafterweise erfolgt dabei die Signalisierung gemäß dem ISDN-Protokoll oder gemäß einem erweiterten bzw. reduzierten ISDN-Protokoll, wobei die standardisierte Kanalaufteilung in 2 B-Kanäle (je 64kBit/s) und einen D-Kanal (16 kBit/s) getroffen ist.

Die digitalen Amtsleitungen ermöglichen es somit, verschiedene Anzeigemöglichkeiten (SMS, COLP, CLIP o.ä.) einer digitalen Nebenstellenanlage auch für extern betriebene Funktelephon-Endgeräte anzuwenden. Das ISDN-Protokoll der digitalen Nebenstelle wird innerhalb der Funktelephon-Einheiten 8, 9 in das GSM-Funkprotokoll umgewandelt.

Die Sende- und Empfangsvorrichtungen 8, 9 können dabei in bevorzugter Weise an einem anderen Anbringungsort, vorzugsweise an einem Ort mit guter Funk-Empfangslage, als dem der Nebenstellenanlage angeordnet sein. So wird die Nebenstellenanlage möglicherweise in Kellerräumen und die Funktelephon-Einheiten 8, 9 im Dachbereich anzuordnen sein, um einen guten Funkkontakt zu den Funktelephon-Netzwerken 41, 42 ermöglichen zu können.

Im Ausführungsbeispiel gemäß Fig. 3 ist die Anzahl der Amtsleitungen für die getrennte Funk-Netzwerksanbindung auf eine einzige reduziert worden. Damit ergibt sich der unmittelbare Vorteil, daß auch nur eine Amtsleitung 70 verlegt werden muß.

Dies wird erreicht, indem die der Sende- und Empfangsvorrichtung zugeordnete Vorrichtung zur Sprachkompression bzw. -dekompression 66, die sonst z.B. in den Funktelephon-Einheiten 8, 9 (Fig.2) vorgesehen ist, innerhalb der Nebenstellenanlage 1 angeordnet ist. Der Ausgang der Vorrichtung zur Sprachkompression bzw. -dekompression 66 ist dabei mit der nebenstellenseitigen, digitalen Schnittstelle 64 verbunden, die ihrerseits mit der einzigen digitalen Amtsleitung 70 verbunden ist. Damit können über die eine Schnittstelle 64 aufgrund der vorher durchgeführten Kompression mehrere (mit GSM derzeit bis zu neun) Gesprächs- bzw. Datenverbindungen realisiert werden.

Voraussetzung für die erfindungsgemäße Ausführung nach Fig.3 ist eine stationäre Funktelephon (FCT)-Einheit 39, über welche die Verbindung zu zwei oder aber auch mehreren Funktelephon-Netzwerken 41, 42 herstellbar ist. Dazu sind mehrere Sende- und Empfangsvorrichtungen auch für verschiedene Funktelephonnetzwerke in einer Einheit zusammengefaßt, wobei eine digitale Schnittstelle zur Verbindung mit der Amtsleitung bereitgestellt ist. Eine solche FCT-Einheit ist beispielsweise Fig.4 zu entnehmen.

Eine Vermittlung eines Nebenstellen-Endgeräts wird in einem, in den Fig.1,2 und 3 beispielhaft dargestellten erfindungsgemäßen Telephonsystem folgendermaßen durchgeführt. Innerhalb der Nebenstellenanlage wird zuerst die über eines der Nebenstellen-Endgeräte 2, 3, 4 angewählte Teilnehmernummer bzw. der den Netzbetreiber kennzeichnende Teil davon mit gespeicherten Nummern bzw. Nummernteilen, denen jeweils eine Amtsleitung 5, 6, 7, 50, 60, 70 zugeordnet ist, verglichen und danach die Vermittlung über die der Teilnehmemummer oder dem Nummemteil zugeordneten Amtsleitung 5, 6, 7; 50, 60; 70 vorgenommen.

So kann etwa der Amtsleitung 5 und der stationären Funktelephon-Einheit 8 in Fig. 1 die den Funktelephon-Netzbetreiber kennzeichnende Vorwahl 0664 zugeordnet sein. Wählt nun ein Nebenstellenteilnehmer über sein Endgerät eine Teilnehmemummer mit dieser Vorwahl, wird das jeweilige Endgerät über die diesem Netzbetreiber zugeordnete Funktelephon-Einheit 8 und der mit der Funktelephon-Einheit 8 verbundenen Amtsleitung 5 vermittelt.

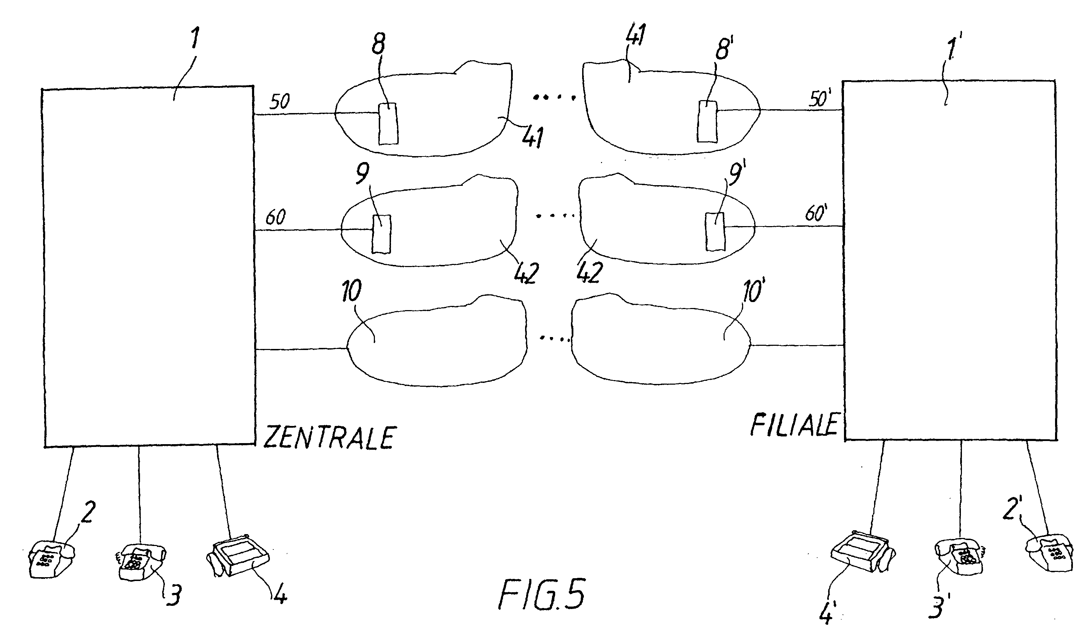

Damit kann eine automatische Zuordnung zum richtigen Funktelephon-Netzwerk vorgenommen werden. Es sind aber noch weitere Anwendungen mit dem erfindungsgemäßen Telephonsystem durchführbar, von der eine in Fig.5 dargestellt ist, die sich zur kostengünstigen Führung von Telephongesprächen zwischen einer Firmenzentrale und einer Firmenfiliale eignet. In der Nebenstellenanlage 1 der Firmenzentrale und einer weiteren Nebenstellenanlage 1' einer Firmenfiliale sind Endgeräte 2,3,4 bzw. 2', 3', 4' vorgesehen. Bei herkömmlichen Systemen wird die Verbindung zwischen einem Endgerät der Zentrale 1 mit einem Endgerät der Filiale 1' über das drahtgebundene Telephonnetzwerk 10 vorgenommen werden. Demgegenüber kann durch das Vorsehen von erfindungsgemäßen Telephonsystemen in der Zentrale und in der Filiale für firmeninterne Gespräche eine automatische Vermittlung über ein Funktelephon-Netzwerk 41, 42 vorgenommen werden. Zu diesem Zweck sind in den Nebenstellenanlagen 1, 1' jeweils alle geeigneten Filialennummern bzw. die Nummer der Zentrale abgespeichert. Diese werden vor dem Aufbau der Verbindung auf Übereinstimmung mit der angewählten Teilnehmernummer überprüft.

Bei Anwählen einer gespeicherten Teilnehmemummer oder Teilen davon, z.B. der Teilnehmernummer der Filiale, deren zugehöriger Teilnehmer z.B. 2' an die Nebenstellenanlage 1' angeschlossen ist, wird das anwählende Nebenstellen-Endgerät 2 mit dem angewählten Nebenstellen-Endgerät 2' über eine der der angewählten Teilnehmernummer oder Teilen davon zugeordneten Funktelephon-Einheiten 8', 9' und die mit diesen verbundenen Amtsleitungen 50', 60'vermittelt. Damit wird das sonst über das drahtgebundene Netzwerk 10 vermittelte Gespräch automatisch auf eines der Funktelephon-Netzwerke 41, 42 umgeleitet und damit eine Gebühreneinsparung ermöglicht.

## Patentansprüche

1. Telephonsystem mit einer Nebenstellenanlage (1), die zumindest einen Schaltknoten, zwei oder mehrere Nebenstellen-Ausgänge (21, 22, 23) für Nebenstellen-Endgeräte (2, 3, 4) und zumindest einen Amtsleitungs-Ausgang (31, 23, 33) umfaßt, über welchen Schaltknoten die Nebenstellen-Ausgänge (21, 22, 23) mit dem zumindest einen Amtsleitungs-Ausgang (31, 32, 33) verbindbar sind, wobei ein oder mehrere der Amtsleitungs-Ausgänge (33) jeweils über eine Amtsleitung (7) mit einem öffentlichen drahtgebundenen Telephonnetzwerk (10) verbunden sind, und wobei die Nebenstellenanlage mit zumindest einer Sende- und Empfangsvorrichtung (8, 9, 39) verbunden ist, **dadurch gekennzeichnet, daß** die Sende- und Empfangsvorrichtung(en) (8, 9, 39) jeweils einem öffentlichen Funktelephon-Netzwerk (41, 42) zugeordnet und mit diesem verbindbar ist oder sind, und daß die Sende- und Empfangsvorrichtung(en) (8, 9, 39) jeweils über eine Amtsleitung (50, 60, 70) und einem der weiteren Amtsleitungs-Ausgänge (31, 32) unmittelbar mit der Nebenstellenanlage verbunden ist oder sind.

2. Telephonsystem nach Anspruch 1, **dadurch gekennzeichnet, daß** die Sende- und Empfangsvorrichtung durch eine einem privaten Netzbetreiber zugeordnete stationäre Funktelephon-Einheit (FCT) (8, 9) gebildet ist, welcher eine Vorrichtung zur Sprachkompression bzw. -dekompression zugeordnet ist.

3. Telephonsystem nach Anspruch 1 oder 2, **dadurch gekennzeichnet, daß** die zumindest eine weitere Amtsleitung durch eine digitale Amtsleitung (50, 60, 70) mit digitalen Schnittstellen (61, 62, 64) an ihren Enden ausgebildet ist.

4. Telephonsystem nach Anspruch 3, **dadurch gekennzeichnet, daß** die zumindest eine weitere digitale Amtsleitung eine ISDN-Leitung (50, 60) mit ISDN-Uₖ₀-Schnittstellen (61, 62) ist.

5. Telephonsystem nach Anspruch 3 oder 4, **dadurch gekennzeichnet, daß** eine Signalisierung auf der digitalen Amtsleitung (50, 60) in digitaler Form erfolgt, wobei digitale Dienste an das Nebenstellen-Endgerät (2, 3, 4) übertragbar sind.

6. Telephonsystem nach Anspruch 5, **dadurch gekennzeichnet, daß** die digitalen Dienste SMS, COLP und CLIP umfassen.

7. Telephonsystem nach einem der Ansprüche 3 bis 6, **dadurch gekennzeichnet, daß** die Signalisierung gemäß dem ISDN-Protokoll oder gemäß einem erweiterten oder reduzierten ISDN-Protokoll erfolgt.

8. Telephonsystem nach einem der Ansprüche 1 bis 7, **dadurch gekennzeichnet, daß** die Sende- und Empfangsvorrichtung an einem anderen Anbringungsort, vorzugsweise an einem Ort mit guter Funk-Empfangslage, als dem der Nebenstellenanlage angeordnet ist.

9. Telephonsystem nach einem der Ansprüche 2 bis 8, **dadurch gekennzeichnet, daß** die der Sende- und Empfangsvorrichtung (8, 9) zugeordnete Vorrichtung zur Sprachkompression bzw. -dekompression (66) innerhalb der Nebenstellenanlage (1) angeordnet ist, und daß der Ausgang der Vorrichtung zur Sprachkompression bzw. -dekompression mit der nebenstellenseitigen, digitalen Schnittstelle (64) verbunden ist.

10. Verfahren zur Vermittlung eines Endgeräts (2, 3, 4) einer Nebenstellenanlage (1) in einem Telephonsystem mit zumindest einem öffentlichen drahtgebundenen Telephonnetzwerk (10) und zumindest einem öffentlichen Funk-Telephonnetzwerk (41, 42), **dadurch gekennzeichnet, daß** innerhalb der Nebenstellenanlage (1) zuerst die über eines der Nebenstellen-Endgeräe (2, 3, 4) angewählte Teilnehmernummer oder der das jeweilige Funk-Telephonnetzwerk (41, 42) kennzeichnende Teil davon mit gespeicherten Nummern oder Nummernteilen, denen jeweils eine Amtsleitung (50, 60; 70) zugeordnet ist, verglichen und danach die Verbindung über die der Teilnehmemummer oder dem Nummernteil des dem jeweiligen Funk-Telephonnetzwerk(41, 42) zugeordneten Amtsleitung (50, 60; 70) vermittelt wird, welche in direkter Verbindung mit einer dem jeweiligen Funk-Telephonnetzwerk (41, 42) zugeordneten Sende- und Empfangsvorrichtung (8, 9, 39) steht.

11. Verfahren nach Anspruch 10, **dadurch gekennzeichnet, daß** bei Anwählen einer einen Funktelephonnetz-Betreiber kennzeichnenden Teilnehmemummer das anwählende Nebenstellen-Endgerät (2, 3, 4) über eine diesem Netzbetreiber zugeordnete Funktelephon-Einheit (8, 9, 39) und die mit der Funktelephon-Einheit (8, 9, 39) direkt verbundenen Amtsleitung (50, 60, 70) vermittelt wird.

12. Verfahren nach Anspruch 10, **dadurch gekennzeichnet, daß** bei Anwählen einer gespeicherten Teilnehmernummer oder von Teilen der Teilnehmemummer, deren zugehöriger Teilnehmer (2', 3', 4') an eine weitere Nebenstellenanlage (1') angeschlossen ist, die sowohl über ein drahtgebundenes Telephonnetzwerk (10') als auch über ein Funktelephon-Netzwerk anwählbar ist, das anwählende Nebenstellen-Endgerät (2, 3, 4) mit dem angewählten Nebenstellen-Endgerät (2', 3', 4') über eine der der angewählten Teilnehmemummer oder Teilen davon zugeordneten Funktelephon-Einheiten (8', 9') und die mit dieser verbundenen Amtsleitung (50', 60') vermittelt wird.

## Claims

1. A telephone system with a private branch exchange (1) which comprises at least one switching node, two or more PBX outputs (21, 22, 23) for PBX terminal devices (2, 3, 4) and at least one direct exchange line output (31, 23, 33), through which switching nodes the PBX outputs (21, 22, 23) can be connected with the at least one direct exchange line output (31, 32, 33), with one or several of the direct exchange line outputs (33) each being connected via a direct exchange line (7) with a public wire-bound telephone network (10) and with the private branch exchange being connected with at least one transmitting and receiving apparatus (8, 9, 39), **characterized in that** the transmitting and receiving apparatus(es) (8, 9, 39) is/are each assigned to a public radiotelephone network (41, 42) and is/are connectable with the same and that the transmitting and receiving apparatus(es) (8, 9, 39) is/are each connected directly with the private branch exchange via a direct exchange line (50, 60, 70) and one of the further direct exchange line outputs (31, 32).

2. A telephone system as claimed in claim 1, **characterized in that** the transmitting and receiving apparatus is formed by a stationary radiotelephone unit (FCT) which is assigned to a private network operator, which unit is associated with an apparatus for voice compression or decompression.

3. A telephone system as claimed in claim 1 or 2, **characterized in that** the at least one further direct exchange line is formed by a digital direct exchange line (50, 60, 70) with digital interfaces (61, 62, 64) at its ends.

4. A telephone system as claimed in claim 3, **characterized in that** the at least one further digital direct exchange line is an ISDN line (50, 60) with ISDN Uₖ₀ interfaces (61, 62).

5. A telephone system as claimed in claim 3 or 4, **characterized in that** signaling occurs on the digital direct exchange line (50, 60) in digital form, with digital services being transmittable to the PBX terminal device (2, 3, 4).

6. A telephone system as claimed in claim 5, **characterized in that** the digital services comprise SMS, COLP and CLIP.

7. A telephone system as claimed in one of the claims 3 to 6, **characterized in that** the signaling occurs according to the ISDN protocol or according to an extended or reduced ISDN protocol.

8. A telephone system as claimed in one of the claims 1 to 7, **characterized in that** transmitting and receiving apparatus is arranged at an installation point other than that of the private branch exchange, preferably a location with favorable radio reception.

9. A telephone system as claimed in one of the claims 2 to 8, **characterized in that** the apparatus for voice compression or decompression (66) which is associated with the transmitting and receiving apparatus (8, 9) is arranged within the private branch exchange (1) and that the output of the apparatus for voice compression or decompression is connected with the digital interface (64) on the side of the private branch exchange.

10. A method for switching a terminal device (2, 3, 4) of a private branch exchange (1) in a telephone system with at least one public, wire-bound telephone network (10) and at least one public radio telephone network (41, 42), **characterized in that** within the private branch exchange (1) at first the subscriber number dialed via one of the PBX terminal devices (2, 3, 4) or the part thereof characterizing the respective radio telephone network (41, 42) is compared with stored numbers or parts of numbers to which one direct exchange line (50, 60; 70) is each assigned and thereafter the connection is switched via the direct exchange line (50, 60; 70) associated with the subscriber number or the part of the number associated with the respective radio telephone network (41, 42), which direct exchange line is in direct connection with a transmitting and receiving apparatus (8, 9, 39) associated with the respective radio telephone network (41, 42).

11. A method as claimed in claim 10, **characterized in that** when dialing a subscriber number characterizing a radio telephone network user, the dialing PBX terminal device (2, 3, 4) is switched via a radio telephone unit (8, 9, 39) associated with said network operator and the direct exchange line (50, 60, 70) directly connected with the radio telephone unit (8, 9, 39).

12. A method as claimed in claim 10, **characterized in that** when dialing a stored subscriber number or parts of the subscriber number whose respective subscriber (2', 3', 4') is connected to a further private branch exchange (1') which can be dialed both via a wire-bound telephone network (10') as well as a radio telephone network, the dialing PTX terminal device (2, 3, 4) is switched with the dialed PBX terminal device (2', 3', 4') via a radio telephone unit (8', 9') associated with one of the dialed subscriber numbers of parts thereof and the direct exchange line (50', 60') connected with the same.

## Revendications

1. Système téléphonique avec une installation privée (1) comprenant au moins un noeud de commutation, deux ou plusieurs sorties de postes secondaires (21, 22, 23) pour des terminaux de poste secondaire (2, 3, 4) et au moins une sortie de ligne de réseau 31, 32, 33) permettant de mettre en communication des noeuds de commutation des sorties de postes secondaires (21, 22, 23) avec la sortie de ligne de réseau (31, 32, 33) au nombre d'une au moins, une ou plusieurs des sorties de lignes de réseau (33) état reliées par une ligne de réseau (7) à un réseau téléphonique filaire public (10), et l'installation de postes secondaires étant reliée à au moins un dispositif émetteur-récepteur (8, 9, 39), **caractérisé en ce que** le ou les dispositifs émetteurs-récepteurs (8, 9, 39) sont associés à un réseau de radiotéléphone public (41, 42) et peuvent être mis en communication avec celui-ci et **en ce que** le ou les dispositifs émetteurs-récepteurs (8, 9, 39) sont directement mis en communication avec l'installation de postes secondaires par une ligne de réseau (50, 60, 70) et l'une des autres sorties de lignes de réseau (31, 32).

2. Système téléphonique selon la revendication 1, **caractérisé en ce que** le dispositif émetteur-récepteur est formé par une unité de radiotéléphone stationnaire (8, 9) appartenant à un exploitant de réseau privé, qui est associée à un dispositif de compression et de décompression vocale.

3. Système téléphonique selon la revendication 1 ou 2, **caractérisé en ce que** l'autre ligne de réseau au nombre d'une au moins est formée par une ligne de réseau numérique (50, 60, 70) terminée par des interfaces numériques (61, 62, 64).

4. Système téléphonique selon la revendication 3, **caractérisé en ce. que** l'autre ligne de réseau numérique au nombre d'une au moins est une ligne RNIS (50, 60) avec des interfaces RNIS-Uₖ₀ (61, 62).

5. Système téléphonique selon la revendication 3 ou 4, **caractérisé en ce qu'**une signalisation sur la ligne de réseau numérique (50, 60) est effectuée sous forme numérique, des service numériques pouvant être transmis au terminal de poste secondaire (2, 3, 4).

6. Système téléphonique selon la revendication 5, **caractérisé en ce que** les services numériques comprennent la messagerie (SMS), la présentation du numéro appelant (COLP) et la présentation de l'identification de la ligne connectée (CLIP).

7. Système téléphonique selon l'une quelconque des revendications 3 à 6, **caractérisé en ce que** la signalisation est réalisée selon le protocole RNIS ou selon un protocole RNIS étendu ou réduit.

8. Système téléphonique selon l'une quelconque des revendications 1 à 7, **caractérisé en ce que** le dispositif émetteur-récepteur est disposé dans un autre lieu d'installation que l'installation de postes secondaires, de préférence en un lieu où la réception radio est bonne.

9. Système téléphonique selon l'une quelconque des revendications 2 à 8, **caractérisé en ce que** le dispositif de compression et de décompression vocale (66) associé au dispositif émetteur-récepteur (8, 9) est disposé à l'intérieur de l'installation de postes secondaires (1) et **en ce que** la sortie du dispositif de compression et de décompression vocale est reliée à l'interface numérique (64) située du côté du poste secondaire.

10. Procédé de mise en communication d'un terminal (2, 3, 4) d'une installation de postes secondaires (1) dans un système téléphonique comprenant au moins un réseau téléphonique filaire public (10) et au moins un réseau de radiotéléphone public (41, 42), **caractérisé en ce qu'**à l'intérieur de l'installation de postes secondaires (1), le numéro d'abonné ou 1a partie du numéro caractérisant le réseau de radiotéléphonie (41,42) concerné composés par l'un des terminaux de poste secondaire (2, 3, 4) sont comparés à des numéros ou parties de numéro mémorisés correspondant chacun à une ligne de réseau (50, 60, 70) et la communication est ensuite établie sur la ligne de réseau (50, 60, 70) correspondant au numéro d'abonné ou à la partie du numéro du réseau de radiotéléphonie (41, 42) correspondant, laquelle ligne est en communication directe avec le dispositif émetteur-récepteur (8, 9, 39) correspondant au réseau de radiotéléphonie (41, 42) concerné.

11. Procédé selon la revendication 10, **caractérisé en ce que** lors de la composition d'un numéro d'abonné caractérisant un exploitant de réseau de radiotéléphonie, le terminal de poste secondaire (2, 3, 4) qui compose le numéro est mis en communication par une unité de radiotéléphone (8, 9, 39) correspondant à cet exploitant de réseau et la ligne de réseau (50, 60, 70) directement reliée à l'unité de radiotéléphone (8, 9, 39).

12. Procédé selon la revendication 10, **caractérisé en ce que** lors de la composition d'un numéro d'abonné ou de parties du numéro d'abonné mémorisés dont l'abonné (2', 3', 4') est connecté à une autre installation de postes secondaires (1'), pouvant être appelée aussi bien par un réseau téléphonique filaire (10') que par un réseau de radiotéléphone, l'appareil de poste secondaire (2, 3, 4) qui compose le numéro est mis en communication avec le terminal de poste secondaire (2', 3', 4') appelé par une unité de radiotéléphone (8', 9') associée au numéro d'abonné composé ou à des parties de celui-ci et par la ligne de réseau (50', 60') reliée à celle-ci.
